# EUROPEAN PATENT SPECIFICATION

(11) **EP 3 950 968 B1**
(45) Date of publication and mention of the grant of the patent: **19.06.2024**
(21) Application number: 20778469.5
(22) Date of filing: 24.03.2020
(51) Int. Cl.: G01N 15/1433, G01N 15/14, G01N 21/27, G01N 15/0205, F27D 21/00, C21B 7/24, C21B 5/00, G01N 15/1429, G01N 15/1434, G01N 15/00

(54) **POWDER RATIO MEASUREMENT DEVICE, POWDER RATIO MEASUREMENT SYSTEM, POWDER RATIO MEASUREMENT METHOD, COMPUTER PROGRAM TO OPERATE POWDER RATIO MEASUREMENT DEVICE, BLAST FURNACE AND BLAST FURNACE OPERATION METHOD**
PULVERVERHÄLTNISMESSVORRICHTUNG, PULVERVERHÄLTNISMESSSYSTEM, PULVERVERHÄLTNISMESSVERFAHREN, COMPUTERPROGRAMM ZUM BETRIEB EINER PULVERVERHÄLTNISMESSVORRICHTUNG, HOCHOFEN UND HOCHOFENBETRIEBSVERFAHREN
DISPOSITIF DE MESURE DE RATIO DE POUDRE, SYSTÈME DE MESURE DE RATIO DE POUDRE, PROCÉDÉ DE MESURE DE RATIO DE POUDRE, PROGRAMME INFORMATIQUE ASSOCIÉ, HAUT-FOURNEAU ET PROCÉDÉ DE FONCTIONNEMENT DE HAUT-FOURNEAU

(30) Priority: 28.03.2019 JP 2019062707
(43) Date of publication of application: 09.02.2022
(73) Proprietor: JFE Steel Corporation, Tokyo 100-0011 (JP)
(72) Inventor: YAMAHIRA, Naoshi, Tokyo 100-0011 (JP)
(74) Representative: Hoffmann Eitle
(86) International application number: PCT/JP2020/012925
(87) International publication number: WO 2020/196487

(56) References cited:
- WO-A1-2018/101287
- WO-A1-2018/181942
- WO-A1-2018/181942
- JP-A- 2008 082 948
- JP-A- 2014 038 014
- JP-A- 2015 124 436
- JP-A- 2015 124 436
- JP-A- 2016 141 828
- JP-A- 2017 057 504
- US-A1- 2007 263 212
- US-A1- 2012 306 257

## Description

### TECHNICAL FIELD

The present invention relates to a powder ratio measurement apparatus, a powder ratio measurement system, and a powder ratio measurement method for measuring a powder ratio of powder attached to a raw material used in a blast furnace or the like.

Further, the present invention also relates to a computer program for realizing a powder ratio measurement method. Furthermore, the present invention also relates to a blast furnace including the above-described powder ratio measurement apparatus and a blast furnace operation method performed while measuring a powder ratio.

### BACKGROUND ART

In production facilities such as a blast furnace where raw materials such as iron ore and coke are used, a particle size of the raw materials affects operation of a production process. In order to stabilize the production process, it is necessary to perceive particle size information of the raw material in advance. In the production process in the blast furnace, it is important to perceive the particle size of raw materials such as iron ore, sintered ore, and coke. In particular, in order to ensure air permeability in the blast furnace, it is necessary to perform the operation with attention to a powder ratio of fine powder attached to the raw material charged into the blast furnace. The powder ratio means a ratio of a mass of powder to a total mass of the charge material.

In order to maintain the air permeability in the blast furnace, it is important to secure voids formed within the raw material. When the raw material contains a large quantity of small lumps and powder, the voids formed within the raw material are filled with the small lumps and the powder, so that the air permeability is lowered. Thus, performed is an operation in which the raw material to be charged is sieved in advance and only lumps on a sieve are charged into the blast furnace. Generally iron ore powder and small lumps are removed by the sieving prior to charging into the blast furnace. However, it is difficult to completely remove the powder by a normal sieving operation. In particular, the powder attached to a surface of the raw material is charged into the blast furnace together with the raw material, and the raw material and the powder are separated in the blast furnace, thereby lowering the air permeability in the blast furnace. Thus, it is required to perceive an amount of powder attached to the surface of the raw material in advance and to control the amount of powder charged into the blast furnace.

Conventionally, the particle size and powder ratio of the raw material to be charged into the blast furnace has been measured by periodical sampling of the raw material and sieve analysis. However, since the sieve analysis takes time, it is difficult to reflect real-time results in blast furnace operation. For this reason, a technique for perceiving a particle size distribution of the raw material conveyed to the blast furnace in real time has been required.

As such a device, JP 2005 134301 A discloses a particle size distribution measuring device that samples a raw material on a conveyor that conveys the raw material, automatically sieves a sample using a robot or the like, and measures the particle size distribution.

In addition, devices for measuring the particle size of a raw material in real time using a camera or the like are also disclosed. For example, JP 2000 329683 A discloses a method in which an image of a raw material bulk conveyed on a conveyor is captured on the conveyor to create image data, a brightness distribution is obtained from the image data, and the particle size of the raw material bulk is detected using a maximum peak height of the brightness distribution. JP 2015 124436 A discloses a blast furnace charge detection device that detects an amount of moisture in a charge based on spectral information obtained from reflected light in a near-infrared region among reflected light from the charge to be charged into a blast furnace. The detection device detects the powder ratio of the charge in real time by finding a relationship between an amount of moisture in the charge and the powder ratio of attached powder of the charge.

WO 2018181942A1 describes a raw material particle size distribution measuring device and particle size distribution measuring method capable of measuring with high accuracy a particle size distribution of a raw material containing coarse particles and fine particles, and a void ratio measuring device which measures a void ratio using the measured particle size distribution. This raw material particle size distribution measuring device comprises: a coarse particle measuring device which acquires information indicating a particle size distribution of coarse particles; a fine particle measuring device which acquires information indicating a particle size distribution of fine particles; and a calculating device which calculates a particle size distribution of the coarse particles using the information indicating the particle size distribution of the coarse particles, calculates a particle size distribution of the fine particles using the information indicating the particle size distribution of the fine particles, and calculates a particle size distribution of the overall raw material using the particle size distribution of the coarse particles and the particle size distribution of the fine particles.

JP 2015124436A describes a blast furnace charging material detecting device capable of identifying a kind of the charging material, and detecting a state of each of the charging material. Reflected light of a near-infrared region from a charging material is dispersed to acquire spectrum, and a kind of the charging material is discriminated based on the acquired spectrum. After the kind of the charging material is discriminated, an existing area of the charging material of the discriminated kind is obtained based on, for example, an image, and fineness of the charging material of the discriminated kind is detected. After discrimination of the kind of the charging material, a moisture content of the charging material of the discriminated kind is detected based on the spectrum of the charging material of the discriminated kind. In addition, the moisture content of the charging material obtained from the spectrum and a powder rate of the charging material are in a unique relationship, so that the powder rate of the charging material of the discriminated kind is detected based on the moisture content.

WO 2018101287A1 describes a powder ratio measuring device and a powder ratio measuring system capable of measuring in real-time and with high accuracy the powder ratio of powder adhered to the surface of a bulky substance used as a raw material in an operating process of a blast furnace or the like. This powder ratio measuring device for measuring the powder ratio of powder adhered to the surface of a bulky substance is provided with: an illuminating device which illuminates the bulky substance; an image capturing device which captures an image of the bulky substance and creates image data; and an arithmetic logic device including a computing unit which computes a characteristic value of the image data created by the image capturing device, and a converting unit which converts the characteristic value computed by the computing unit into a powder ratio.

JP 2016141828A describes a blast furnace charging material detecting method capable of detecting the kind and moisture content of a charging material as a state. A blast furnace charging material detecting method includes: in the case of using an arithmetic processing unit 7 and a database 8 and detecting a state of a blast furnace charging material, spectrally separating a reflected light in a near-infrared region from a charging material whose kind and moisture content are clear so as to acquire reflected spectrum information comprising spectrum for the number of M pieces of wavelength; and giving the kind and moisture content of the charging material as the property to the information and storing in the database 8 followed by repeating the process for a charging material having different kind and moisture content. Furthermore, the method includes: after newly acquiring reflection spectrum information from a charging material whose kind and moisture content are unclear, demanding a distance between the reflection spectrum information stored on an M-dimensional space, and newly acquired reflection spectrum information; selecting from the database 8, stored reflection spectrum information whose distance is small; and detecting the kind and moisture content of a charging material which newly acquires reflection spectrum from the property of the selected reflection spectrum information.

JP 2017057504A describes a device for detecting a material charged into a blast furnace which can detect a powder rate of the charged material. Reflected light in a near infrared region from a charged material is dispersed to obtain a spectrum, and the moisture content of the charged material is detected from the obtained spectrum. Since the moisture content of the charged material, obtained from the spectrum and the powder rate of the charged material are uniquely related to each other, the powder rate of the charged material is detected from the water content.

### SUMMARY OF INVENTION

### TECHNICAL PROBLEMS

However, the conventional technology has the following problems.

The particle size distribution measuring device disclosed in JP 2005 134301 A has a problem that an excessive increase in sampling frequency leads to a delay in the operation process. In addition, since it is a sampling inspection, there is also a problem with representativeness of sampling.

In the particle size detection method disclosed in JP 2000 329683 A, a plurality of types of maximum peak height data of the brightness distribution measured in a raw material bulk having a known particle size are preliminarily prepared by particle size. Then, the particle size of the raw material bulk is detected by comparing the maximum peak height of the brightness distribution calculated from the measured image data with the maximum peak height preliminarily prepared. That is, the particle size detection method of JP 2000 329683 A does not quantitatively measure the powder ratio of the powder. In addition, JP 2000 329683 A does not describe that the powder ratio of fine powder attached to a substance can be measured. For this reason, the method disclosed in JP 2000 329683 A has a problem that the powder ratio of the powder attached to a surface of a substance cannot be quantitatively measured.

The blast furnace charge detection device disclosed in JP 2015 124436 A is a device that detects an amount of moisture in the charge based on the spectral information of near infrared rays and detects the powder ratio of the charge based on the relationship between an amount of moisture in the charge and the powder ratio of the charge. However, in JP 2015 124436 A, since a correlation between an amount of moisture in the charge and the powder ratio of the charge is not high, there is a problem that accuracy of powder ratio measurement is not high. In addition, in an inorganic substance such as iron ore, a spectral reflectance is greatly different between a bare surface of the substance and attached powder due to differences in component and oxidation degree. When the substance undergoes repeated collisions during transportation to thereby partially expose its bare surface, the reflectance change degrades moisture detection performance, and as a result, powder ratio measurement accuracy is also not high.

The present invention has been made in view of the above circumstances, and an object thereof is to provide a powder ratio measurement apparatus, a powder ratio measurement system, and a powder ratio measurement method capable of measuring a powder ratio of powder attached to a surface of a substance used as a raw material in an operation process of a blast furnace or the like in real time with high accuracy.

Another object of the present invention is to provide a computer program for realizing the powder ratio measurement method, and a blast furnace including the powder ratio measurement apparatus. Another object of the present invention is to operate a blast furnace while accurately measuring a powder ratio of powder attached to a surface of a raw material to be charged into the blast furnace.

### SOLUTION TO PROBLEMS

A powder ratio measurement apparatus in accordance with the present invention is defined by claim 1.

A powder ratio measurement system according to the present invention is defined by claim 2.

A powder ratio measurement method of measuring a powder ratio of powder attached to a surface of a raw material in accordance with the present invention is defined by claim 3.

A computer program according to the present invention is defined by claim 4.

A blast furnace according to the present invention is defined by claim 5.

A blast furnace operation method according to the present invention is defined by claim 6.

### ADVANTAGEOUS EFFECTS OF INVENTION

By using the powder ratio measurement apparatus, the powder ratio measurement system, and the powder ratio measurement method according to the present invention, the powder ratio of powder attached to the surface of a substance can be measured with high accuracy and in real time. By the powder ratio measurement apparatus, the powder ratio measurement system, and the powder ratio measurement method according to the present invention, for example, the powder ratio of iron ore which is a raw material to be charged into a blast furnace is measured in real time to manage an amount of iron ore powder charged into the blast furnace, thereby contributing to stabilization of blast furnace operation.

According to the present invention, it is possible to realize a computer program for implementing the powder ratio measurement method, a blast furnace including the powder ratio measurement apparatus, and a blast furnace operation method.

### BRIEF DESCRIPTION OF DRAWINGS

[FIG. 1] FIG. 1 is a schematic view showing an example of a powder ratio measurement system including a powder ratio measurement apparatus according to an embodiment of the present invention and a peripheral configuration thereof.
[FIG. 2] FIG. 2 is a photograph of two types of iron ore taken with a color camera.
[FIG. 3] FIG. 3 is a photograph of the two types of iron ore taken with a color camera after the iron ore is washed with water to remove part of powder.
[FIG. 4] FIG. 4 is a view showing a first example of a processing flow for measuring a powder ratio in the present invention.
[FIG. 5] FIG. 5 is a histogram of a hue (H) of an image obtained by performing HSV conversion on an RGB image of iron ore.
[FIG. 6] FIG. 6 is an image of iron ore displayed such that a bare surface region to which powder is not attached is extracted according to a set threshold and that only a color of the bare surface region is converted into white.
[FIG. 7] FIG. 7 is a view showing a comparison result between the powder ratio measured by a measurement method of the present invention and the powder ratio actually measured by sieve analysis.
[FIG. 8] FIG. 8 is a view showing a second example of the processing flow for measuring the powder ratio in the present invention.
[FIG. 9] FIG. 9 is a view showing a correlation between an average brightness value and the powder ratio.
[FIG. 10] FIG. 10 is a view showing a flow obtained by generalizing the processing flow shown in FIG. 8.
[FIG. 11] FIG. 11 is a view showing a spectral distribution of brightness of each pixel located in a region where powder is attached.
[FIG. 12] FIG. 12 is a view showing a third example of the processing flow for measuring the powder ratio in the present invention.
[FIG. 13] FIG. 13 is a view showing a spectral distribution in which the brightness of a wavelength corresponding to the color of the bare surface region is masked.

### DESCRIPTION OF EMBODIMENTS

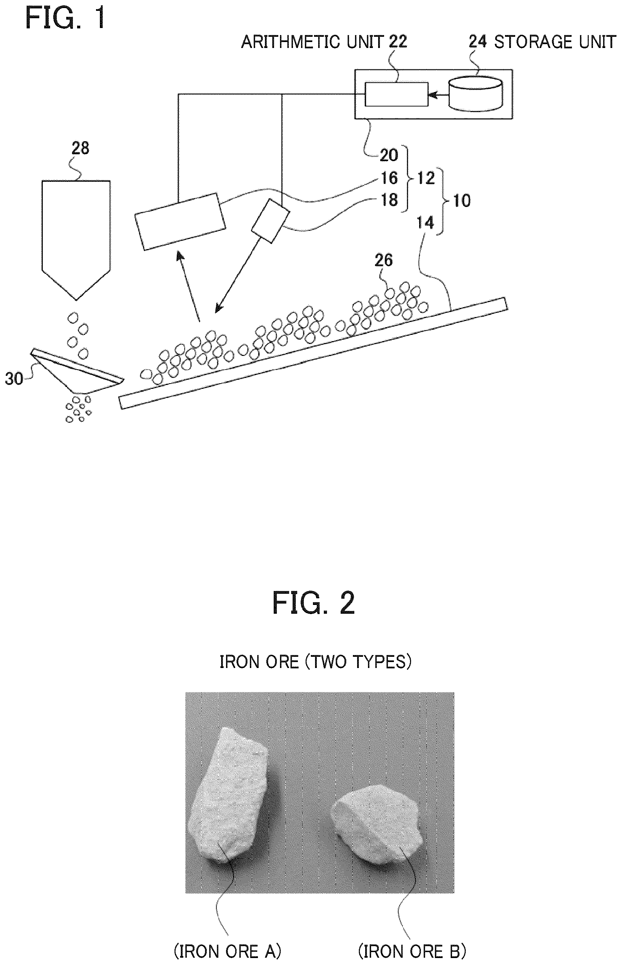

Hereinafter, an embodiment of the present invention will be described using an example of measuring a powder ratio of iron ore, which is a raw material to be charged into a blast furnace, using a powder ratio measurement apparatus according to the present invention. FIG. 1 is a view showing the embodiment of the present invention and is a schematic view showing an example of a powder ratio measurement system including the powder ratio measurement apparatus according to the present invention and a peripheral configuration thereof.

A powder ratio measurement system 10 includes a powder ratio measurement apparatus 12 and a conveyor 14. Iron ore 26 to be charged into a blast furnace (not shown) is stored in a hopper 28. The iron ore 26 discharged from the hopper 28 is sieved by a sieve 30 to thereby drop iron ore powder having a particle diameter smaller than an opening size of the sieve 30, and then conveyed to the blast furnace by the conveyor 14.

Air permeability in the blast furnace is determined according to a weight ratio of fine powder (iron ore powder) attached to a surface of the iron ore 26 charged into the furnace, that is, a powder ratio and the like, in addition to a method of blowing hot air. In general, as the powder ratio increases, a gap formed between lumps of iron ore 26 tends to be filled with the powder, so that the air permeability lowers. Thus, while the blast furnace is operated, the powder ratio of the iron ore 26 charged into the blast furnace is confirmed by an operator of the blast furnace. In the present embodiment, the powder ratio of the iron ore 26 charged into the blast furnace is periodically measured and monitored during the operation of the blast furnace.

In the present embodiment, an operation condition of the blast furnace is set according to a measured value of the powder ratio. Specifically, when the measured value of the powder ratio exceeds a threshold, an amount of hot air blown into the blast furnace is reduced, or a ratio of an amount of coke to an amount of the iron ore 26 charged in a certain charging batch is increased.

In the present embodiment, the opening size of the sieve 30 is 10 mm. Thus, the iron ore 26 conveyed by the conveyor 14 includes iron ore having a particle diameter of 10 mm or more and iron ore powder that is attached to the iron ore and does not fall even when sieved by the sieve 30. When the particle diameter of the iron ore powder attached to the iron ore 26 was measured, the iron ore powder had a particle diameter of 1 mm or less. In the present embodiment, the iron ore powder means iron ore powder having a particle diameter of 1 mm or less, and the iron ore 26 means iron ore having a particle diameter of 10 mm or more and remaining on the sieve. In the example shown in FIG. 1, the iron ore 26 is an exemplary substance and is a lump-shaped substance.

The powder ratio measurement apparatus 12 is an apparatus that measures the powder ratio of the iron ore 26 conveyed by the conveyor 14. The powder ratio measurement apparatus 12 includes an illumination device 18, a spectroscopic device 16, and an arithmetic device 20. The illumination device 18 is provided above the conveyor 14 and illuminates the iron ore 26 conveyed by the conveyor 14.

The spectroscopic device 16 is provided above the conveyor 14, captures an image of the iron ore 26 conveyed by the conveyor 14, spectrally disperses reflected light from the iron ore 26, and measures a spectral reflectance. In the present embodiment, the spectral reflectance is obtained in a range (range of angle of view) of the captured image of the iron ore 26; however, for example, the spectral reflectance may be measured in a visual field range or a predetermined range.

As described above, since the iron ore 26 includes iron ore and iron ore powder attached to the surface of the iron ore, the spectral reflectance measured by the spectroscopic device 16 is affected not only by the iron ore but also by the iron ore powder attached to the surface of the iron ore. Thus, the spectral reflectance measured by the spectroscopic device 16 also includes information on the iron ore powder attached to the iron ore 26.

A height at which the spectroscopic device 16 is installed is set to a height determined by a specification of the device, and is preferably 300 mm or more and 1000 mm or less above the conveyor 14 in consideration of contact with the iron ore 26 conveyed by the conveyor 14. With this configuration, even if an amount of the iron ore 26 conveyed by the conveyor 14 temporarily increases, contact between the spectroscopic device 16 and the iron ore 26 on the conveyor can be prevented. The measurement of the spectral reflectance by the spectroscopic device 16 is preferably performed before the iron ore 26 is inserted into the blast furnace. Thus, the spectroscopic device 16 is preferably disposed of the front side from the blast furnace, and is preferably disposed near a downstream end of the conveyor 14 (end on the side where the iron ore 26 is delivered to the blast furnace).

The arithmetic device 20 is, for example, a generalpurpose computer such as a workstation or a personal computer having an arithmetic unit 22 and a storage unit 24.

The arithmetic unit 22 is, for example, a CPU or the like, and controls operations of the illumination device 18 and the spectroscopic device 16 using a program and data stored in the storage unit 24. In addition, the arithmetic unit 22 calculates, using at least the spectral reflectance of a region to which powder is attached among the spectral reflectances at various positions on the iron ore surface acquired by the spectroscopic device 16, a value corresponding to an area of the region to which powder is attached and obtains the powder ratio based on the calculated value. A procedure for obtaining the powder ratio will be described later.

The storage unit 24 preliminarily stores a program for controlling the illumination device 18 and the spectroscopic device 16, a program for executing arithmetic operation in the arithmetic unit 22, an arithmetic expression and a mathematical expression to be used during execution of the program, and the like.

Under the control of the arithmetic unit 22, the spectroscopic device 16 captures an image of the iron ore 26 at every predetermined time, spectrally disperses the reflected light from the iron ore 26, and measures the spectral reflectance. The predetermined time can be determined according to, for example, a measurement range of the iron ore 26 measured by the spectroscopic device 16 and a conveyance speed of the conveyor 14. That is, the predetermined time can be a time calculated by dividing a length of the measurement range in a conveying direction of the conveyor 14 by the conveyance speed of the conveyor 14. Accordingly, the spectroscopic device 16 can measure the iron ore 26 in the conveying direction of the conveyor 14 without an interval. Furthermore, the spectroscopic device 16 preferably measures the spectral reflectance of the iron ore 26 from a direction perpendicular to the conveying direction of the conveyor 14.

In the present embodiment, for example, a color camera is used as the spectroscopic device 16. That is, in the present embodiment, a color image (specifically, RGB image) is taken in order to measure the spectral reflectance for each pixel, and the spectral reflectance is represented by a pixel value such as an RGB gradation value. A device other than the color camera may be used as long as the spectral reflectance can be measured in real time.

FIG. 2 shows a photograph of two types of iron ore A, B taken with the color camera. Although the photograph in FIG. 2 is a monochrome photograph, the actual photograph is a color photograph. In the monochrome photograph, the iron ore A appears slightly whiter than the iron ore B; however, in the color photograph, the iron ore A appears orange, and the iron ore B appears red. As described above, even when almost the same amount of iron ore powder is attached to the iron ore, a color tint is different depending on the type of iron ore. This is considered to be due to the fact that even if the powder ratio of the iron ore powder attached to the iron ore is almost the same, a component of the attached iron ore powder and an oxidation degree are different.

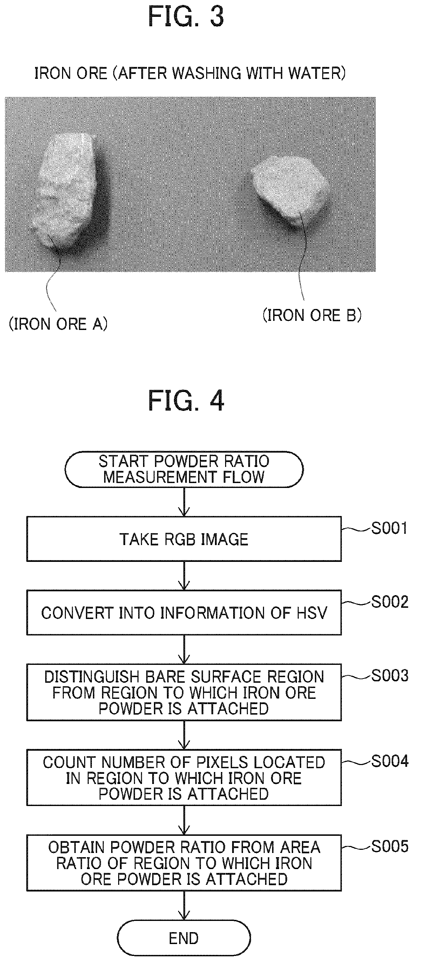

FIG. 3 is a photograph of the iron ore A and the iron ore B taken with a color camera after the iron ore A and the iron ore B are washed with water to remove the iron ore powder. Meanwhile, not all the attached iron ore powder is removed, but part of the iron ore powder remains attached. Although the photograph in FIG. 3 is a monochrome photograph, the actual photograph is a color photograph. In the monochrome photograph, while it is difficult to understand the difference from the photograph of FIG. 2, in the color photograph, a bare surface region where the iron ore powder is removed and the bare surface of the iron ore is exposed appears black in both the iron ore A and the iron ore B. On the other hand, a region to which the iron ore powder is attached appears orange (iron ore A) or red (iron ore B), and the color tint is greatly different from that of the bare surface region.

From the above results, the present inventors have found that measurement accuracy of the powder ratio is improved by eliminating the bare surface region, extracting the region to which the iron ore powder is attached, and determining a value corresponding to the area of the region to which the iron ore powder is attached based on a color tint difference between the bare surface region and the region to which the iron ore powder is attached on the iron ore surface. The value corresponding to the area of the region to which the iron ore powder is attached is, for example, the number of pixels located in the region.

FIG. 4 shows an example of a powder ratio measurement procedure. First, an RGB image of the iron ore 26 is taken with a color camera (S001). Thereafter, the pixel value of each pixel in the RGB image is converted into information of three components including hue (H), saturation (S), and lightness (V) (S002). As a conversion method, a known method can be used, and for example, a method described in a document "Smith, A.R. "Color Gamut Transform Pairs,' SIGGRAPH 78 Conference Proceeding, 1978, pp. 12-19" is exemplified.

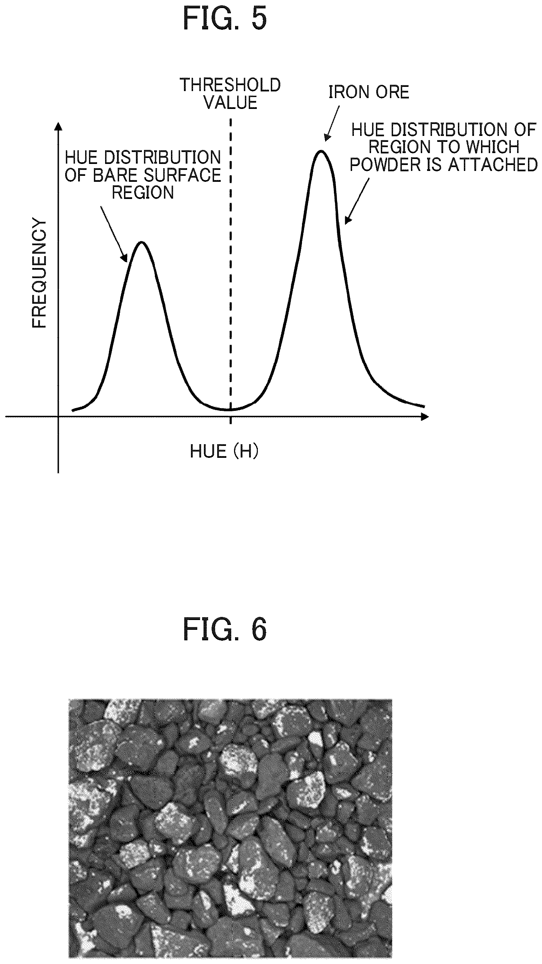

When the RGB image of the imaged iron ore is subjected to HSV conversion and a histogram is taken with respect to the hue (H) of the image, as an example, a histogram as shown in FIG. 5 is obtained. In FIG. 5, the horizontal axis represents the hue (H), and the vertical axis represents an appearance frequency of the pixel indicating each hue (H). As shown in FIG. 5, in the histogram of the hue (H) obtained from the RGB image of the iron ore 26, two peaks are shown, and a mountain-shaped distribution appears for each peak. In the drawing, the distribution of the hue (H) on the left side corresponds to a hue distribution of the bare surface region, and the distribution of the hue (H) on the right side corresponds to the hue distribution of the region to which the powder is attached. As shown in FIG. 5, the hue (H) serving as a threshold exists between the two peaks, and the two hue distributions are separated by the threshold.

As described above, the threshold separating the bare surface region on the iron ore surface from the region to which the iron ore powder is attached is determined from the histogram of the hue (H) obtained by imaging each iron ore. This makes it possible to distinguish the bare surface region from the region to which the iron ore powder is attached, depending on a difference in color tint (S003). Since the hue (H) serving as the threshold varies depending on the type of iron ore, by determining the threshold in advance for each type, it is possible to distinguish the bare surface region from the region to which the iron ore powder is attached regardless of the difference in color tint derived from the type of iron ore.

FIG. 6 is an image of iron ore displayed such that the bare surface region on the iron ore surface is extracted according to the threshold set as described above, and that only a color of the bare surface region is converted into white.

Next, the number of pixels located in the region to which the iron ore powder is attached on the iron ore surface is counted (S004), and an area ratio x of the region to which the iron ore powder is attached is obtained from the number of pixels (S005). Specifically, the area ratio x is obtained by dividing the number of pixels in the region to which the iron ore powder is attached by the total number of pixels of the iron ore in the taken image. As a method of extracting pixels of the iron ore from the taken image and specifying the number of the pixels of the iron ore, a known image processing method can be used.

On the other hand, for the execution of the processing flow shown in FIG. 4, a calibration curve is determined in advance by, for example, obtaining coefficients a and b in a regression equation y = ax + b approximating a correlation between the area ratio x and a powder ratio y, and the area ratio of the region to which the iron ore powder is attached is associated with the powder ratio. Thus, the powder ratio y can be obtained from the area ratio x. By determining the powder ratio by the above procedure, it is possible to stably measure the powder ratio even for iron ore having a large bare surface.

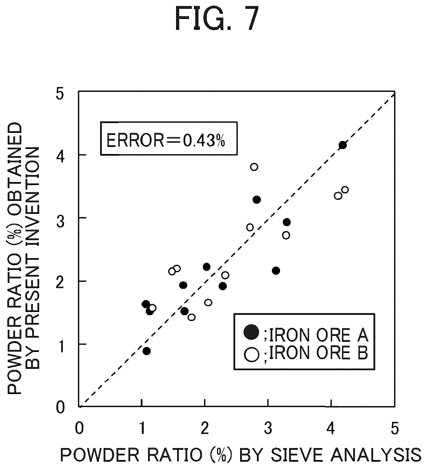

The powder ratio of the sampled iron ore 26 is measured according to the processing flow shown in FIG. 4, the powder ratio is actually measured by sieve analysis, and the respective results are shown in FIG. 7. FIG. 7 shows, of the iron ore A and the iron ore B, the powder ratio measured by sieve analysis and the powder ratio measured by the processing flow shown in FIG. 4. As shown in FIG. 7, it has been confirmed that the powder ratio can be accurately measured regardless of the type of iron ore.

In the processing flow shown in FIG. 4, the correlation between the area ratio and the powder ratio is established on the premise that the ratio of a region to which the iron ore powder is attached is constant from a surface layer to a lower layer and that the iron ore powder is uniformly attached in the region to which the iron ore is attached.

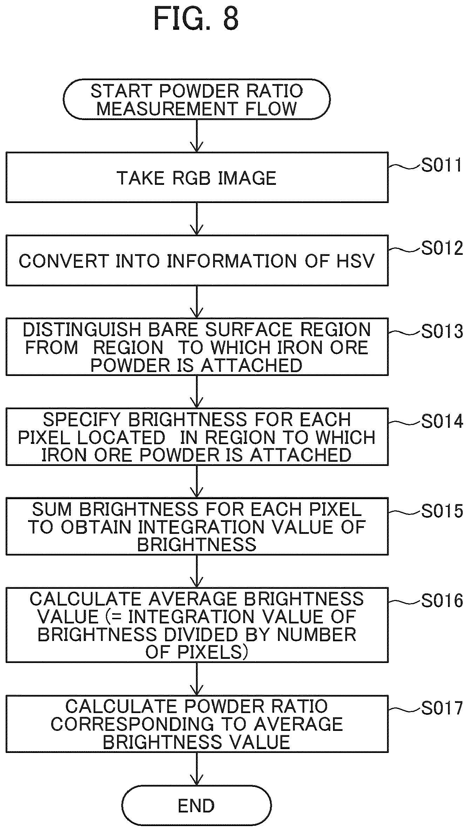

On the other hand, in the processing flow shown in FIG. 8, the powder ratio can be accurately measured under a condition that the iron ore powder is not uniformly attached. In the processing flow shown in FIG. 8, the powder ratio is measured using brightness (lightness (V) in the case of HSV conversion) for each pixel in the region to which the iron ore powder is attached. This measurement is based on a phenomenon in which an amount of the attached iron ore powder increases as an amount of moisture increases, and an amount of light reflection decreases as an amount of moisture increases.

In the processing flow of FIG. 8, HSV information is acquired from the captured image of the iron ore 26 by the procedure similar to S001 to S003 of the processing flow of FIG. 4, the threshold separating the bare surface region on the iron ore surface from the region to which the iron ore powder is attached is determined from the histogram of the hue (H), and the bare surface region and the region to which the iron ore powder is attached are distinguished from each other by the threshold (SOll to S013).

Next, the brightness (that is, lightness (V) after HSV conversion) is specified for each pixel located in the region to which the iron ore powder is attached (S014). Thereafter, an integration value of the brightness is obtained by summing the brightness for each pixel (S015), and the integration value of the brightness is divided by the total number of pixels of the iron ore in the taken image to calculate an average value of the brightness (S016).

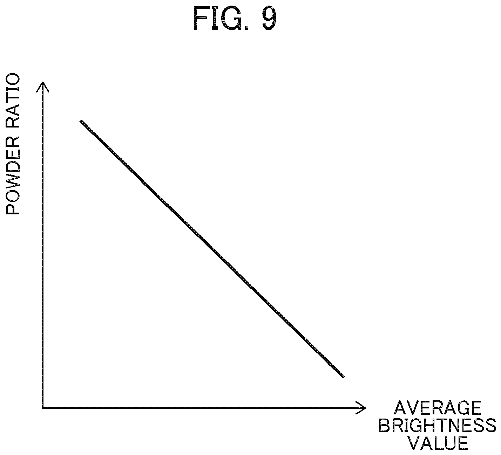

Since an amount of the attached powder tends to increase as the brightness decreases, there is a correlation between the average brightness value and the powder ratio, and the correlation is specified in advance when the processing flow shown in FIG. 8 is performed. Specifically, for the sampled iron ore 26, the average brightness value obtained through steps SOll to S016 of the processing flow shown in FIG. 8 and the powder ratio obtained by sieve analysis are plotted, and a regression line in FIG. 9 is acquired by linear regression. A correlation between the average brightness value and the powder ratio is not limited to the case of applying the linear regression, and curve regression may be applied.

Then, the powder ratio corresponding to the average brightness value calculated in step S016 is calculated from the regression line (S017). Through a series of steps up to this point, the powder ratio is measured using the brightness. By using the brightness in this manner, the powder ratio can be accurately measured regardless of a difference in color (specifically, hue (H)) of the iron ore powder due to a difference in the type of iron ore.

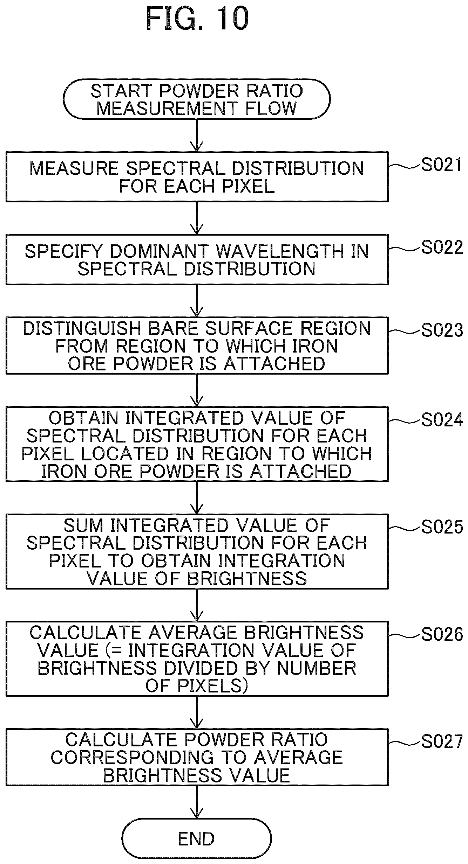

The RGB image of the iron ore 26 taken in step S011 of the processing flow shown in FIG. 8 corresponds to an example of a spectral distribution. Thus, a method of obtaining the powder ratio in the flow processing flow shown in FIG. 8 can be generalized as a processing flow of obtaining the powder ratio using the spectral distribution for each pixel in the region to which the iron ore powder is attached, as shown in FIG. 10.

That is, step S011 of taking the RGB image in the processing flow shown in FIG. 8 corresponds to step S021 of capturing the image of the iron ore 26 and measuring the spectral distribution for each pixel in the generalized processing flow shown in FIG. 10.

Step S012 of performing the HSV conversion on the RGB image to obtain the hue (H) corresponds to step S022 of specifying a dominant wavelength (that is, peak wavelength) from a peak position of the measured spectral distribution. Step S013 of distinguishing the bare surface region from the region to which the iron ore powder is attached from the histogram of the hue (H) corresponds to step S023 of distinguishing the bare surface region from the region to which the iron ore powder is attached based on the dominant wavelength (peak wavelength).

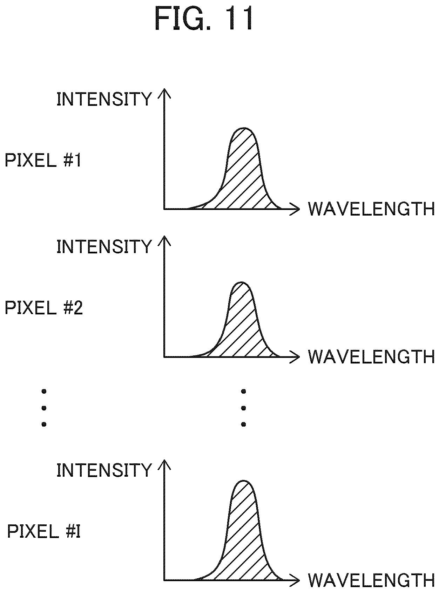

Steps S014 and S015 of specifying the brightness (specifically, lightness (V)) for each pixel and summing the brightness for each pixel to obtain the integration value of the brightness correspond to steps S024 and S025 of obtaining an integrated value for the spectral distribution for each pixel and summing the integrated value for each pixel. In step S024, the integrated value (in the drawing, an area of a hatched portion) of the spectral distribution for each pixel shown in FIG. 11 is obtained, and the obtained value is taken as the brightness for each pixel. In step S025, the integrated value of the spectral distribution for each pixel is summed to obtain the integration value of the brightness.

The peak wavelength of the spectral distribution reflects the oxidation degree of the iron ore powder in a portion located in the pixel indicating the spectral distribution, and a peak height reflects an amount of the iron ore powder attached in the portion located in the pixel.

Subsequent steps S026 and S027 in the processing flow shown in FIG. 10 are substantially similar to steps S016 and S017 in the processing flow shown in FIG. 8, the average brightness value is calculated by dividing the integration value of the brightness by the total number of pixels of the iron ore in the captured image, and the powder ratio corresponding to the calculated average brightness value is calculated based on the regression line specified in advance.

In the above example, the bare surface region and the region to which the iron ore powder is attached are distinguished from each other, and the integrated value of the spectral distribution is obtained as the brightness for each pixel in the region to which the iron ore powder is attached.

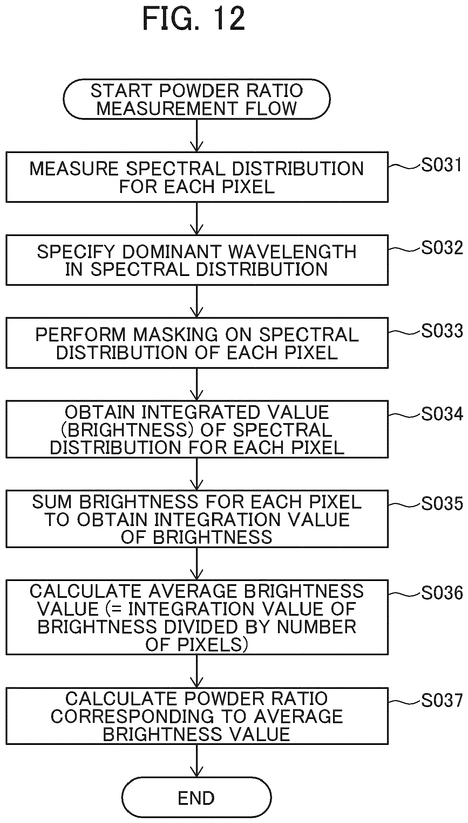

On the other hand, in the processing flow shown in FIG. 12 described below, instead of distinguishing the bare surface region from the region to which the iron ore powder is attached, masking is performed to remove an influence of the brightness of the bare surface region. Hereinafter, the processing flow shown in FIG. 12 will be described.

While the processing flow shown in FIG. 12 is obtained by changing a part of the processing flow shown in FIG. 10, the processing flow shown in FIG. 8 may be similarly changed.

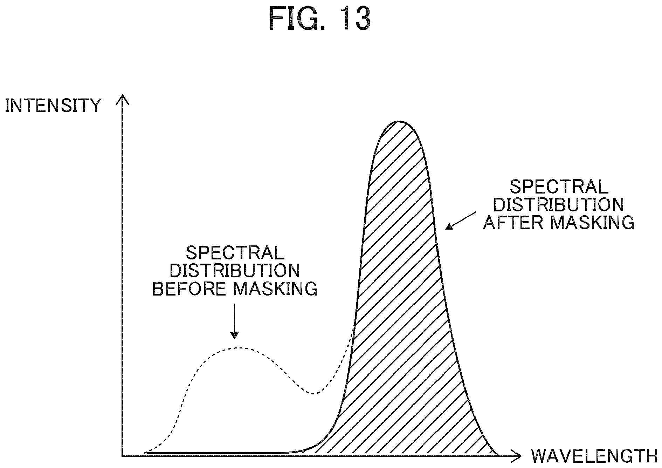

In the processing flow shown in FIG. 12, an image of iron ore is captured, the spectral distribution is measured for each pixel, and a dominant wavelength in the spectral distribution of each pixel is specified (S031 to S032). Thereafter, masking processing is performed on the spectral distribution of each pixel (S033). In the spectral distribution after masking, as shown in FIG. 13, components having wavelengths equal to or less than a threshold wavelength are cut. The threshold wavelength is a wavelength corresponding to a threshold determined for separating the bare surface region from the region to which the iron ore powder is attached.

Next, the spectral distribution after masking is integrated for each pixel to thus obtain the integrated value (= brightness) for each pixel, the brightness for each pixel is summed to obtain the integration value of the brightness, and the brightness integration value is divided by the total number of pixels of the iron ore in the captured image to calculate the average brightness value (S034 to S036). Then, the powder ratio corresponding to the average brightness value calculated in step S036 is calculated from the regression line shown in FIG. 9 (S037).

In the processing flow shown in FIG. 12, for example, when the spectral distribution after masking is integrated to obtain the brightness, the masking is not limited to processing capable of completely removing the influence of the brightness of the bare surface region (that is, processing in which the brightness equal to or less than the threshold wavelength is set to 0), and in the masking, the brightness of the bare surface region may remain in the spectral distribution. In that case, the powder ratio is obtained using the brightness of the region to which the iron ore powder is attached and the brightness of the bare surface region. Meanwhile, if the brightness of the bare surface region remains, the accuracy of the powder ratio calculation decreases. Thus, when the brightness of the region to which the iron ore powder is attached is 100%, the brightness of the bare surface region is preferably removed to 10% or less. When the brightness of the bare surface region is 10% or less, it is known in the experience of the inventors of the present invention that the powder ratio can be calculated with acceptable accuracy.

In the conveyance of the iron ore, there is a phenomenon in which the iron ore lumps collide with one another while the iron ore is being conveyed, and the iron ore is sieved by the sieve 30, so that part of the powder falls and the bare surface of the iron ore is exposed. Thus, when the powder ratio of the entire iron ore is determined by measurement at one point, there is a risk that an error increase. However, in the present invention, since the powder ratio is obtained using the data (spectral reflectance) of each pixel in the image, a measurement error can be extremely reduced.

As described above, by using the powder ratio measurement apparatus, the powder ratio measurement system, and the powder ratio measurement method according to the present invention, the powder ratio of powder attached to a substance surface can be measured with high accuracy and in real time.

In the blast furnace according to the present invention, the operation can be suitably performed while measuring the powder ratio of powder to be charged into the blast furnace by the powder ratio measurement apparatus. In a blast furnace operation method according to the present invention, the operation condition of the blast furnace is set according to the powder ratio obtained in the manner described above. For example, when the powder ratio becomes relatively high, it is expected that the air permeability in the furnace will lower in the future, and therefore, an amount of hot air blown into the furnace is reduced in advance, or another operation condition of the blast furnace is set (changed). As a result, the blast furnace can be suitably operated.

In the present embodiment, an example of the iron ore 26 has been described as the substance; however, the substance is not limited thereto. As an example of the raw material charged into the blast furnace, coke or sintered ore may be used instead of the iron ore 26.

### DESCRIPTION OF SYMBOLS

- 10: Powder ratio measurement system
- 12: Powder ratio measurement apparatus
- 14: Conveyor
- 16: Spectroscopic device
- 18: Illumination device
- 20: Arithmetic device
- 22: Arithmetic unit
- 24: Storage unit
- 26: Iron ore
- 28: Hopper
- 30: Sieve

## Claims

1. A powder ratio measurement apparatus that measures a powder ratio of powder attached to a surface of a raw material charged into a blast furnace, the powder ratio measurement apparatus (12) comprising:
an illumination device (18) that illuminates the raw material;
a spectroscopic device (16) that captures an image of the raw material, spectrally disperses reflected light from the raw material, and measures spectral reflectance at each of various positions on the surface of the raw material; and
an arithmetic device (22) that executes processing for omitting the spectral reflectance of a bare surface region from the spectral reflectance at each of the various positions on the surface of the raw material measured by the spectroscopic device (16) based on a difference in spectral reflectance between the bare surface region and the region to which the powder is attached on the surface of the raw material,
determines brightness for each pixel located in the region to which the powder is attached from the spectral reflectance at each of the various positions on the surface of the raw material after the processing is executed,
calculates average brightness based on the brightness determined for each pixel, and
determines the powder ratio based on the average brightness calculated and a correlation specified in advance between an average brightness and a powder ratio.

2. A powder ratio measurement system comprising:
the powder ratio measurement apparatus (12) according to claim 1; and
a conveyor (14) that conveys a raw material charged into a blast furnace,
wherein the powder ratio measurement apparatus (12) is provided above the conveyor (14), and measures a powder ratio of powder attached to a surface of the raw material conveyed to a blast furnace by the conveyor (14).

3. A powder ratio measurement method of measuring a powder ratio of powder attached to a surface of a raw material (26) charged into a blast furnace, the powder ratio measurement method comprising:
a step of controlling an illumination device (18) and illuminating the raw material;
a step of controlling a spectroscopic device (16), capturing an image of the raw material, spectrally dispersing reflected light from the raw material, and measuring a spectral reflectance at each of various positions on the surface of the raw material; and
a step of processing for omitting the spectral reflectance of a bare surface region from the spectral reflectance at each of the various positions on the surface of the raw material measured by the spectroscopic device (16) based on a difference in spectral reflectance between the bare surface region and the region to which the powder is attached on the surface of the raw material,
determining brightness for each pixel located in the region to which the powder is attached from the spectral reflectance at each of the various positions on the surface of the raw material after the processing is executed,
calculating average brightness based on the brightness determined for each pixel, and
determining the powder ratio based on the average brightness calculated and a correlation specified in advance between an average brightness and a powder ratio.

4. A computer program comprising instructions to cause the powder ratio measurement system of claim 1 or 2 to execute the steps of the powder ratio measurement method according to claim 3.

5. A blast furnace comprising the powder ratio measurement apparatus according to claim 1, wherein the powder ratio measurement apparatus (12) measures a powder ratio of powder attached to a surface of a raw material conveyed to the blast furnace.

6. A blast furnace operation method comprising:
a step of illuminating a raw material charged into a blast furnace conveyed to a blast furnace;
a step of capturing an image of the raw material, spectrally dispersing reflected light from the raw material, and measuring a spectral reflectance at each of various positions on the surface of the raw material;
a step of processing for omitting the spectral reflectance of a bare surface region from the spectral reflectance at each of the various positions on the surface of the raw material measured by the spectroscopic device (16) based on a difference in spectral reflectance between the bare surface region and the region to which the powder is attached on the surface of the raw material,
determining brightness for each pixel located in the region to which powder is attached from the spectral reflectance at each of the various positions on the surface of the raw material after the processing is executed,
calculating average brightness based on the brightness determined for each pixel, and
determining the powder ratio based on the average brightness calculated and a correlation specified in advance between an average brightness and a powder ratio; and
a step of setting an operation condition of the blast furnace according to the powder ratio obtained.

## Patentansprüche

1. Pulververhältnis-Messvorrichtung, die ein Pulververhältnis von Pulver misst, das an einer Oberfläche eines in einen Hochofen eingebrachten Rohmaterials angebracht ist, wobei die Pulververhältnis-Messvorrichtung (12) umfasst:
eine Beleuchtungsvorrichtung (18), die das Rohmaterial beleuchtet;
eine spektroskopische Vorrichtung (16), die ein Bild des Rohmaterials aufnimmt, vom Rohmaterial reflektiertes Licht spektral streut, und ein spektrales Reflexionsvermögen an jeder von verschiedenen Positionen auf der Oberfläche des Rohmaterials misst; und
eine arithmetische Vorrichtung (22), die eine Verarbeitung ausführt, um das spektrale Reflexionsvermögen eines blanken Oberflächenbereichs von dem spektralen Reflexionsvermögen an jeder der verschiedenen Positionen auf der Oberfläche des Rohmaterials, das von der spektroskopischen Vorrichtung (16) gemessen wird, auf der Grundlage einer Differenz im spektralen Reflexionsvermögen zwischen dem blanken Oberflächenbereich und dem Bereich, an dem das Pulver auf der Oberfläche des Rohmaterials angebracht ist, wegzulassen,
eine Helligkeit für jedes Pixel, das sich in dem Bereich befindet, an dem das Pulver angebracht ist, aus dem spektralen Reflexionsvermögen an jeder der verschiedenen Positionen auf der Oberfläche des Rohmaterials, nachdem die Verarbeitung ausgeführt ist, bestimmt,
eine durchschnittliche Helligkeit auf der Grundlage der für jedes Pixel bestimmten Helligkeit berechnet, und
das Pulververhältnis auf der Grundlage der berechneten durchschnittlichen Helligkeit und einer im Voraus spezifizierten Korrelation zwischen einer durchschnittlichen Helligkeit und einem Pulververhältnis bestimmt.

2. Pulververhältnis-Messsystem, umfassend:
die Pulververhältnis-Messvorrichtung (12) nach Anspruch 1; und
einen Förderer (14), der ein in einen Hochofen eingebrachtes Rohmaterial transportiert,
wobei die Pulververhältnis-Messvorrichtung (12) oberhalb des Förderers (14) bereitgestellt ist und ein Pulververhältnis von an einer Oberfläche des durch den Förderer (14) zu einem Hochofen transportierten Rohmaterials angebrachten Pulvers misst.

3. Pulververhältnis-Messverfahren zum Messen eines Pulververhältnisses von Pulver, das an einer Oberfläche eines in einen Hochofen eingebrachten Rohmaterials (26) angebracht ist, wobei das Pulververhältnis-Messverfahren umfasst:
einen Schritt des Steuerns einer Beleuchtungsvorrichtung (18) und des Beleuchtens des Rohmaterials;
einen Schritt des Steuerns einer spektroskopischen Vorrichtung (16), des Aufnehmens eines Bildes des Rohmaterials, des spektralen Streuens von von dem Rohmaterial reflektiertem Licht, und des Messens eines spektralen Reflexionsvermögens an jeder von verschiedenen Positionen auf der Oberfläche des Rohmaterials; und
einen Schritt des Verarbeitens zum Weglassen des spektralen Reflexionsvermögens eines blanken Oberflächenbereichs aus dem spektralen Reflexionsvermögen an jeder der verschiedenen Positionen auf der Oberfläche des Rohmaterials, das von der spektroskopischen Vorrichtung (16) gemessen wird, auf der Grundlage einer Differenz im spektralen Reflexionsvermögen zwischen dem blanken Oberflächenbereich und dem Bereich, an dem das Pulver auf der Oberfläche des Rohmaterials angebracht ist,
des Bestimmens einer Helligkeit für jedes Pixel, das sich in dem Bereich befindet, an dem das Pulver angebracht ist, aus dem spektralen Reflexionsvermögen an jeder der verschiedenen Positionen auf der Oberfläche des Rohmaterials, nachdem die Verarbeitung ausgeführt ist,
des Berechnens einer durchschnittlichen Helligkeit auf der Grundlage der für jedes Pixel bestimmten Helligkeit, und
des Bestimmens des Pulververhältnisses auf der Grundlage der berechneten durchschnittlichen Helligkeit und einer im Voraus spezifizierten Korrelation zwischen einer durchschnittlichen Helligkeit und einem Pulververhältnis.

4. Computerprogramm, umfassend Anweisungen, um das Pulververhältnis-Messsystem nach Anspruch 1 oder 2 dazu zu veranlassen, die Schritte des Pulververhältnis-Messverfahrens nach Anspruch 3 auszuführen.

5. Hochofen, umfassend die Pulververhältnis-Messvorrichtung nach Anspruch 1, wobei die Pulververhältnis-Messvorrichtung (12) ein Pulververhältnis von Pulver misst, das an einer Oberfläche eines zum Hochofen transportierten Rohmaterials angebracht ist.

6. Hochofenbetriebsverfahren, umfassend:
einen Schritt des Beleuchtens eines in einen Hochofen eingebrachten Rohmaterials, das zu einem Hochofen transportiert wird;
einen Schritt des Aufnehmens eines Bildes des Rohmaterials, des spektralen Streuens von von dem Rohmaterial reflektiertem Licht, und des Messens eines spektralen Reflexionsvermögens an jeder von verschiedenen Positionen auf der Oberfläche des Rohmaterials;
einen Schritt des Verarbeitens zum Weglassen des spektralen Reflexionsvermögens eines blanken Oberflächenbereichs aus dem spektralen Reflexionsvermögen an jeder der verschiedenen Positionen auf der Oberfläche des Rohmaterials, das von der spektroskopischen Vorrichtung (16) gemessen wird, auf der Grundlage einer Differenz im spektralen Reflexionsvermögen zwischen dem blanken Oberflächenbereich und dem Bereich, an dem das Pulver auf der Oberfläche des Rohmaterials angebracht ist,
des Bestimmens einer Helligkeit für jedes Pixel, das sich in dem Bereich befindet, an dem Pulver angebracht ist, aus dem spektralen Reflexionsvermögen an jeder der verschiedenen Positionen auf der Oberfläche des Rohmaterials, nachdem die Verarbeitung ausgeführt ist,
des Berechnens einer durchschnittlichen Helligkeit auf der Grundlage der für jedes Pixel bestimmten Helligkeit, und
des Bestimmens des Pulververhältnisses auf der Grundlage der berechneten durchschnittlichen Helligkeit und einer im Voraus spezifizierten Korrelation zwischen einer durchschnittlichen Helligkeit und einem Pulververhältnis; und
einen Schritt des Einstellens eines Betriebszustands des Hochofens entsprechend dem erhaltenen Pulververhältnis.

## Revendications

1. Appareil de mesure de rapport de poudre qui mesure un rapport de poudre d'une poudre fixée à une surface d'une matière première chargée dans un haut-fourneau, l'appareil (12) de mesure de rapport de poudre comprenant :
un dispositif d'éclairage (18) qui éclaire la matière première ;
un dispositif spectroscopique (16) qui capture une image de la matière première, disperse spectralement la lumière réfléchie par la matière première et mesure la réflectance spectrale à chacune de diverses positions sur la surface de la matière première ; et
un dispositif arithmétique (22) qui exécute un traitement pour omettre la réflectance spectrale d'une région de surface nue de la réflectance spectrale à chacune des diverses positions sur la surface de la matière première mesurée par le dispositif spectroscopique (16) sur la base d'une différence de réflectance spectrale entre la région de surface nue et la région au niveau de laquelle la poudre est fixée sur la surface de la matière première,
détermine la luminosité pour chaque pixel situé dans la région au niveau de laquelle la poudre est fixée à partir de la réflectance spectrale à chacune des diverses positions sur la surface de la matière première après l'exécution du traitement,
calcule une luminosité moyenne sur la base de la luminosité déterminée pour chaque pixel, et
détermine le rapport de poudre sur la base de la luminosité moyenne calculée et d'une corrélation spécifiée à l'avance entre une luminosité moyenne et un rapport de poudre.

2. Système de mesure de rapport de poudre comprenant :
l'appareil (12) de mesure de rapport de poudre selon la revendication 1 ; et
un convoyeur (14) qui transporte une matière première chargée dans un haut-fourneau,
dans lequel l'appareil (12) de mesure de rapport de poudre est prévu au-dessus du convoyeur (14), et mesure un rapport de poudre d'une poudre fixée à une surface de la matière première transportée vers un haut-fourneau par le convoyeur (14).

3. Procédé de mesure de rapport de poudre qui mesure un rapport de poudre d'une poudre fixée à une surface d'une matière première (26) chargée dans un haut-fourneau, le procédé de mesure de rapport de poudre comprenant :
une étape de commande d'un dispositif d'éclairage (18) et d'éclairage de la matière première ;
une étape de commande d'un dispositif spectroscopique (16), de capture d'une image de la matière première, de dispersion spectrale de la lumière réfléchie par la matière première, et de mesure d'une réflectance spectrale à chacune de diverses positions sur la surface de la matière première ; et
une étape de traitement pour omettre la réflectance spectrale d'une région de surface nue de la réflectance spectrale à chacune des diverses positions sur la surface de la matière première mesurée par le dispositif spectroscopique (16) sur la base d'une différence de réflectance spectrale entre la région de surface nue et la région au niveau de laquelle la poudre est fixée sur la surface de la matière première,
une détermination de la luminosité pour chaque pixel situé dans la région au niveau de laquelle la poudre est fixée à partir de la réflectance spectrale à chacune des diverses positions sur la surface de la matière première après l'exécution du traitement,
un calcul d'une luminosité moyenne sur la base de la luminosité déterminée pour chaque pixel, et
une détermination du rapport de poudre sur la base de la luminosité moyenne calculée et d'une corrélation spécifiée à l'avance entre une luminosité moyenne et un rapport de poudre.

4. Programme informatique comprenant des instructions pour amener le système de mesure de rapport de poudre selon la revendication 1 ou la revendication 2 à exécuter les étapes du procédé de mesure de rapport de poudre selon la revendication 3.

5. Haut-fourneau comprenant l'appareil de mesure de rapport de poudre selon la revendication 1, dans lequel l'appareil (12) de mesure de rapport de poudre mesure un rapport de poudre d'une poudre fixée à une surface d'une matière première transportée vers le haut-fourneau.

6. Procédé de fonctionnement d'un haut-fourneau comprenant :
une étape d'éclairage d'une matière première chargée dans un haut-fourneau transportée vers un haut-fourneau ;
une étape de capture d'une image de la matière première, de dispersion spectrale de la lumière réfléchie par la matière première, et de mesure de la réflectance spectrale à chacune de diverses positions sur la surface de la matière première ;
une étape de traitement pour omettre la réflectance spectrale d'une région de surface nue de la réflectance spectrale à chacune des diverses positions sur la surface de la matière première mesurée par le dispositif spectroscopique (16) sur la base d'une différence de réflectance spectrale entre la région de surface nue et la région au niveau de laquelle la poudre est fixée sur la surface de la matière première,
une détermination de la luminosité pour chaque pixel situé dans la région au niveau de laquelle une poudre est fixée à partir de la réflectance spectrale à chacune des diverses positions sur la surface de la matière première après l'exécution du traitement,
un calcul d'une luminosité moyenne sur la base de la luminosité déterminée pour chaque pixel, et
une détermination du rapport de poudre sur la base de la luminosité moyenne calculée et d'une corrélation spécifiée à l'avance entre une luminosité moyenne et un rapport de poudre ; et
une étape d'établissement d'une condition de fonctionnement du haut-fourneau en fonction du rapport de poudre obtenu.
